# EUROPEAN PATENT SPECIFICATION

(11) **EP 3 054 674 B1**
(45) Date of publication and mention of the grant of the patent: **22.01.2020**
(21) Application number: 14848994.1
(22) Date of filing: 13.08.2014
(51) Int. Cl.: H02J 13/00, H04N 5/765, H02J 7/34, H04N 9/82, H04N 5/232

(54) **INFORMATION PROCESSING APPARATUS AND INFORMATION PROCESSING METHOD**
VORRICHTUNG ZUR INFORMATIONSVERARBEITUNG UND VERFAHREN ZUR INFORMATIONSVERARBEITUNG
APPAREIL ET PROCÉDÉ DE TRAITEMENT D'INFORMATIONS

(30) Priority: 30.09.2013 JP 2013205031
(43) Date of publication of application: 10.08.2016
(73) Proprietor: Sony Corporation, Tokyo 108-0075 (JP)
(72) Inventor: YAJIMA, Masakazu, Tokyo 108-0075 (JP); MORI, Takahiro, Tokyo 108-0075 (JP); KITAGAWA, Takeshi, Tokyo 108-0075 (JP); SAKAI, Hideki, Tokyo 108-0075 (JP); TSUCHIDA, Yoshihisa, Tokyo 108-0075 (JP)
(74) Representative: Witte, Weller & Partner Patentanwälte mbB
(86) International application number: PCT/JP2014/071381
(87) International publication number: WO 2015/045665

(56) References cited:
- JP-A- 2007 055 450
- JP-A- 2010 244 107
- JP-A- 2011 176 796
- JP-A- 2012 080 601
- JP-A- 2012 080 601
- US-A- 5 920 726

## Description

### Technical Field

The present disclosure relates to information processing apparatuses and information processing methods.

### Background Art

For example, a technology for changing an image capturing operation on the basis of "a power storage amount in a power storage device such as a battery" and "a power generation amount in a power generation device and a power storage amount in a power storage device" has been developed. Examples of the technology for changing an image capturing operation include a technology described in the following Patent Literature 1 and a technology described in the following Patent Literature 2.

Further, document JP 2011 176796 A discloses a technique for stably forming a radio network, even when base stations are operated by storage batteries. The base stations each may include a lighting system. The lighting systems may include a solar panel, a storage battery, an illumination part, a control part and an imaging device.

Document US 5 920 726 A discloses a system for recovering from a power failure in a digital camera.

Document JP 2012 080601 A discloses a data processing apparatus for a display system which can reproduce as video a manner of changes in power information at a plurality of times in a past period.

### Citation List

### Patent Literature

Patent Literature 1: JP 2009-200702A
Patent Literature 2: JP 2004-187058A

### Summary of Invention

### Technical Problem

In the future, there is a possibility that needs for recognizing an environment where power is generated by a power generation device (in other words, environment where power has been generated. Hereinafter, it is also referred to as a "power generation environment of the power generation device") arise. However, a method for causing a user to recognize the power generation environment of the power generation device has not been established.

The present disclosure proposes a novel and improved information processing apparatus and information processing method capable of causing a user to recognize a power generation environment of a power generation device.

### Solution to Problem

According to the present disclosure, there is provided an information processing apparatus according to claim 1.

In addition, according to the present disclosure, there is provided an information processing method executed by an information processing apparatus according to claim 5.

Advantageous embodiments are defined in the sub-claims.

### Advantageous Effects of Invention

According to the present disclosure, it is possible to cause a user to recognize a power generation environment of a power generation device.

Note that the effects described above are not necessarily limited, and along with or instead of the effects, any effect that is desired to be introduced in the present specification or other effects that can be expected from the present specification may be exhibited.

### Brief Description of Drawings

[FIG. 1] FIG. 1 is an explanatory diagram illustrating an example of a process in an information processing method according to the present embodiment.
[FIG. 2] FIG. 2 is an explanatory diagram illustrating an example of a process in an information processing method according to the present embodiment.
[FIG. 3] FIG. 3 is an explanatory diagram illustrating an example of a condition that decides a process timing decided by a timing table according to the present embodiment.
[FIG. 4] FIG. 4 is a block diagram illustrating an example of a configuration of an information processing apparatus according to the present embodiment.
[FIG. 5] FIG. 5 is an explanatory diagram illustrating an example of a hardware configuration of an information processing apparatus according to the present embodiment.

### Description of Embodiment(s)

Hereinafter, (a) preferred embodiment(s) of the present disclosure will be described in detail with reference to the appended drawings. In this specification and the drawings, elements that have substantially the same function and structure are denoted with the same reference signs, and repeated explanation is omitted.

Note that the description is given in the following order.
1. Information Processing Method according to Present Embodiment
2. Information Processing Apparatus according to Present Embodiment
3. Program according to Present Embodiment

### (Information Processing Method according to Present Embodiment)

First, an information processing method according to the present embodiment is described before an explanation of a configuration of an information processing apparatus according to the present embodiment. Hereinafter, the information processing method according to the present embodiment is described while the case where the information processing apparatus according to the present embodiment carries out a process in the information processing method according to the present embodiment is used as an example.

### [1] Overview of Process in Information Processing Method according to Present Embodiment

As described above, the method for recognizing the power generation environment of the power generation device has not been established. Examples of the power generation device according to the present embodiment include a power generator, a power transmission apparatus using electromagnetic resonance or electromagnetic induction, and the like. The power generator includes a vibration or motion powered generator (electrostatic type, electromagnetic type, inverse magnetostriction type, or piezoelectric type), a photovoltaic cell, a thermoelectric conversion element (including power generation using the Seebeck effect or the Thomson effect, a thermionic element, and thermomagnetic power generation), an enzyme battery, radio wave power generation, and adjacent electromagnetic field power generation. The power generation device according to the present embodiment may be made by combining power generation devices using different power generation methods.

For example, the information processing apparatus according to the present embodiment selectively records environmental information in a recording medium on the basis of a power generation sate of a power generation device. Since the information processing apparatus according to the present embodiment records the environmental information in the recording medium, it is possible to cause a user who wants to recognize a power generation environment of the power generation device (hereinafter, also referred to as a "user" simply) to recognize the power generation environment of the power generation device by using the environmental information stored in the recording medium.

More specifically, the information processing apparatus according to the present embodiment determines whether the environmental information is to be recorded, on the basis of the power generation state of the power generation device (determination process). Examples of the power generation device relating to the determination in the determination process according to the present embodiment include a power generation device constituting a power generation unit (to be described later) included in the information processing apparatus according to the present embodiment.

Subsequently, in the case where it is determined that the environmental information is to be recorded, the information processing apparatus according to the present embodiment records the environmental information in the recording medium by carrying out a process relating to the recording of the environmental information (recording control process). Examples of the recording medium according to the present embodiment include a recording unit (to be described later) included in the information processing apparatus according to the present embodiment, an external recording medium connected to the information processing apparatus according to the present embodiment, a recording medium included in an external apparatus capable of communicating with the information processing apparatus according to the present embodiment in a wired or wireless manner, and a recording medium connected to the external apparatus.

The environmental information in the present embodiment is data indicating the power generation environment of the power generation device. Examples of the environmental information in the present embodiment include one or both of "information relating to image capturing carried out by an imaging device in a process relating to the recording of the environmental information (to be described later)" and "information relating to time when it is determined that the environmental information is to be recorded in the determination process in the present embodiment". Note that, the environmental information in the present embodiment is not limited to the above described examples. For example, the environmental information in the present embodiment may further include "detection information indicating a detection value detected by a sensor that detects a value indicating an installation site environment where the power generation device is installed".

Examples of the imaging device according to the present embodiment include an imaging device constituting an imaging unit (to be described later) included in the information processing apparatus according to the present embodiment, and an external imaging device capable of communicating with the information processing apparatus according to the present embodiment in a wired or wireless manner. Examples of the site where the imaging device according to the present embodiment is installed include a site where an image of the power generation environment of the power generation device can be captured. Examples of the "power generation environment of the power generation device" where the imaging device according to the present embodiment captures an image include an amount of light shone on the power generation device (for example, in the case where the power generation device is the photovoltaic cell), a level of growth of fruits or the like (for example, in the case where the power generation device is the enzyme battery), and various environments depending on power generation methods of power generation devices. Note that, the site where the imaging device according to the present embodiment is installed is not limited to the above described examples.

### (i) Case where Environmental Information according to Present Embodiment is Information relating to Image Capturing according to Present Embodiment

For example, the information relating to the image capturing according to the present embodiment is one or both of an image captured by the imaging device and information relating to time when the image has been captured.

### (i-1) Case where Environmental Information according to Present Embodiment is Captured Image

The captured image indicates the power generation environment of the power generation device in the case where the captured image serving as information relating to the image capturing according to the present embodiment is a captured image of the power generation environment of the power generation device, for example. Since the captured image is recorded as the environmental information, the user can see the captured image serving as the environmental information and can recognize the power generation environment of the power generation device. The user also can recognize the power generation environment of the power generation device not only by contents of the captured image but also by the number of captured images (in other words, frequency of image capturing), for example.

### (i-2) Case where Environmental Information according to Present Embodiment is Information relating to Time when Image has been Captured

Examples of the information relating to time when the image has been captured according to the present embodiment include data indicating time when the image has been captured and data indicating image capturing intervals. The image capturing interval is directly or indirectly indicated by the information relating to time when images have been captured according to the present embodiment, and the image capturing interval indicates the power generation environment of the power generation device as described in the following items (a) to (e). Note that, the environment indicated by the information relating to time when images have been captured according to the present embodiment is not limited to the following examples. Of course, the environment can indicate various environments depending on power generation methods of the power generation devices.

### (a) Case where Power Generation Device Generates Power from Vibration

In the case where image capturing intervals are short, the power generation environment is an environment with heavy vibration (for example, environment with heavy vibration, large frequency, a large product thereof, or a large value of integral of the product). In the case where image capturing intervals are long, the power generation environment is an environment without heavy vibration.

### (b) Case where Power Generation Device Generates Power from Light

In the case where image capturing intervals are short, the power generation environment is a bright environment (for example, environment with high luminance, long light irradiation time, a large product thereof, or a large value of integral of the product). In the case where image capturing intervals are long, the power generation environment is a dark environment.

### (c) Case where Power Generation Device Carries Out Thermoelectric Power Generation

In the case where image capturing intervals are short, the power generation environment is, for example, an environment with a large difference or fluctuation in temperature. In the case where image capturing intervals are long, the power generation environment is, for example, an environment with a little difference or fluctuation in temperature.

### (d) Case where Power Generation Device Generates Power using Radio Wave

In the case where image capturing intervals are short, the power generation environment is, for example, an "environment with a frequency easily received by an antenna and with high radiant intensity". In the case where image capturing intervals are long, the power generation environment is an "environment without a frequency easily received by an antenna or without high radiant intensity".

### (e) Case where Power Generation Device Generates Power using Sugar and Enzyme Reaction

In the case where image capturing intervals are short, the power generation environment is, for example, an environment with high concentration of a component to be decomposed such as glucose. In the case where image capturing intervals are long, the power generation environment is, for example, an environment without high concentration of a component to be decomposed.

The information relating to time when an image has been captured is recoded as the environmental information. Therefore, the user can recognize the power generation environment of the power generation device.

### (i-3) Case where Environmental Information according to Present Embodiment is Captured Image and Information relating to Time when Image has been Captured

In the case where the information relating to image capturing according to the present embodiment is a captured image and information relating to time when the image has been captured, the user can recognize the power generation environment of the power generation device by referring to both of the captured image and the information relating to time when the image has been captured. For example, the captured image and the information relating to time when the image has been captured may be recorded as different pieces of data or as a data group. For example, the information relating to time when the image has been captured may be recorded as metadata of the captured image.

The case where the environmental information according to the present embodiment is information relating to image capturing according to the present embodiment corresponds to the case where the power generation environment of the power generation device is sensed by image capturing carried out by the imaging device. In other words, in the case where the information processing apparatus according to the present embodiment records information relating to image capturing as the environmental information in the recording medium during the recording control process according to the present embodiment, it is possible to sense the power generation environment of the power generation device by activating the imaging device, for example. Accordingly, in the case where the information processing apparatus according to the present embodiment records information relating to image capturing as the environmental information in the recording medium during the recording control process according to the present embodiment, it is possible to reduce power consumed by the sensing of the power generation environment of the power generation device.

### (ii) Case where Environmental Information according to Present Embodiment is Information relating to Time when it is Determined that Environmental Information is to be Recorded

Examples of the information relating to time when it is determined that environmental information is to be recorded according to the present embodiment include data indicating time when it is determined that the environmental information is to be recorded in the determination process according to the present embodiment, and data indicating determination intervals (intervals between time when it is determined that the environmental information is to be recorded). The determination intervals are directly or indirectly indicated by the information relating to time when it is determined that the environmental information is to be recorded according to the present embodiment, and the determination intervals indicates the power generation environment of the power generation device in a way similar to the image capturing intervals described in (a) to (e), for example.

Accordingly, the information relating to time when it is determined that environmental information is to be recorded is recoded as the environmental information. Therefore, the user can recognize the power generation environment of the power generation device.

The case where the environmental information according to the present embodiment is information relating to time when it is determined that the environmental information is to be recorded corresponds to the case where the power generation environment of the power generation device is sensed by the determination process according to the present embodiment. In other words, in the case where the information processing apparatus according to the present embodiment records information relating to time when it is determined that the environmental information is to be recorded as the environmental information in the recording medium during the recording control process according to the present embodiment, it is possible to sense the power generation environment of the power generation device by activating the processing circuit for carrying out the determination process according to the present embodiment (for example, processing circuit constituting a control unit (to be described later)), for example. Accordingly, in the case where the information processing apparatus according to the present embodiment records information relating to time when it is determined that environmental information is to be recorded as the environmental information in the recording medium during the recording control process according to the present embodiment, it is possible to reduce power consumed by the sensing of the power generation environment of the power generation device.

### (iii) Case where Environmental Information according to Present Embodiment Further Includes Detection Information

As described above, the environmental information according to the present embodiment is not limited to the information relating to image capturing or the information relating to time when it is determined that the environmental information is to be recorded. The environmental information according to the present embodiment may further include the detection information. For example, the detection information in the present embodiment may be data indicating a detection value detected by a sensor that detects a value indicating an installation site environment where the power generation device is installed. In the case where the power generation device is installed in a wearable apparatus worn by a user or the like, an installation site where the power generation device is installed may be changed. In other words, the installation site where the power generation device according to the present embodiment is installed is not limited to a specific site.

The sensor according to the present embodiment is, for example, a sensor that detects a value relating to power generation carried out by the power generation device. Examples of the sensor according to the present embodiment include a vibration sensor (for example, in the case where the power generation device is the vibration or motion powered generator), a temperature sensor (for example, in the case where the power generation device is the thermoelectric conversion element), a luminance sensor (for example, in the case where the power generation device is the photovoltaic cell), and a sugar content sensor (for example, in the case where the power generation device is the enzyme battery). The sensor according to the present embodiment is not limited thereto. For example, the sensor may be one of various sensors capable of detecting values depending on power generation methods of the power generation devices.

Examples of the sensor according to the present embodiment include a sensor constituting a detection unit (to be described later) included in the information processing apparatus according to the present embodiment, and an external sensor capable of communicating with the information processing apparatus according to the present embodiment in a wired or wireless manner.

For example, during the recording control process according to the present embodiment, the information processing apparatus according to the present embodiment further records, as the environmental information, detection information acquired when it is determined that the environmental information is to be recorded in the determination process according to the present embodiment. For example, the information processing apparatus according to the present embodiment records a piece of detection information acquired when it is determined that the environmental information is to be recorded, among pieces of detection information successively transmitted by a sensor. In addition, for example, the information processing apparatus according to the present embodiment may acquire detection information from the sensor when it is determined that the environmental information is to be recorded, and record the acquired detection information. For example, the information processing apparatus according to the present embodiment transmits a control signal to the sensor and acquire the detection information from the sensor, the control signal including a transmission request to transmit the detection information. The control signal is transmitted, for example, via a signal line in the information processing apparatus according to the present embodiment, a communication unit (to be described later) included in the information processing apparatus, and a connected external communication device.

The recorded detection information indicates an installation site environment where the power generation device is installed. Since the detection information is further recorded as the environmental information, the user can recognize the power generation environment of the power generation device well, by further referring to a value indicated by the detection information.

For example, the information processing apparatus according to the present embodiment carries out the determination process and the recording control process as a process relating to the information processing method according to the present embodiment, and thereby records the environmental information indicating the power generation environment of the power generation device. Since the process relating to the information processing method according to the present embodiment is carried out, the user can recognize the power generation environment of the power generation device. Accordingly, for example, the information processing apparatus according to the present embodiment carries out the determination process and the recording control process as a process relating to the information processing method according to the present embodiment, and thereby causes the user to recognize the power generation environment of the power generation device.

The process relating to the information processing method according to the present embodiment is not limited to the determination process or the recording control process.

For example, the information processing apparatus according to the present embodiment is capable of controlling an operating state on the basis of one or both of a power generation amount and a power storage amount (function control process). Examples of the operating state controlled in the function control process by the information processing apparatus according to the present embodiment include an "operating state of a device that operates using power generated by the power generation device and/or power stored in the power storage device", and an operating state of the information processing apparatus according to the present embodiment (hereinafter, also referred to as "operating mode of the information processing apparatus according to the present embodiment). An example of the function control process according to the present embodiment is described later.

Hereinafter, details of the process in the information processing method according to the present embodiment are described.

### [2] Process in Information Processing Method according to Present Embodiment

### (1) Determination Process

The information processing apparatus according to the present embodiment determines whether the environmental information is to be recorded, on the basis of the power generation state of the power generation device. For example, the information processing apparatus according to the present embodiment determines whether environmental information indicating a power generation environment is recorded, on the basis of one or both of a power generation amount of power generated by a power generation device (hereinafter, also referred to as "power generation amount" simply) and a power storage amount of power stored in a power storage device that stores the power generated by the power generation device (hereinafter, also referred to as "power storage amount" simply).

Examples of the power storage device according to the present embodiment include secondary batteries capable of storing power such as a lithium-ion secondary battery, a lithium-ion polymer battery, and a nickel-metal hydride battery. The power storage device according to the present embodiment may be, for example, any device capable of storing power, or any element capable of storing power such as a capacitor. Examples of the power storage device according to the present embodiment include a power storage device constituting a power storage unit (to be described later) included in the information processing apparatus according to the present embodiment.

More specifically, the information processing apparatus according to the present embodiment determines that environmental information is to be recorded in the case where a power generation amount and/or a power storage amount are/is greater than or equal to a threshold set for each of the power generation amount and the power storage amount, for example. Alternatively, the information processing apparatus according to the present embodiment may determine that environmental information is to be recorded in the case where a power generation amount and/or a power storage amount are/is greater than a threshold set for each of the power generation amount and the power storage amount, for example. Hereinafter, the case where the information processing apparatus according to the present embodiment determines that environmental information is to be recorded when "a power generation amount and/or a power storage amount are/is greater than or equal to a threshold set for each of the power generation amount and the power storage amount" is used as an example.

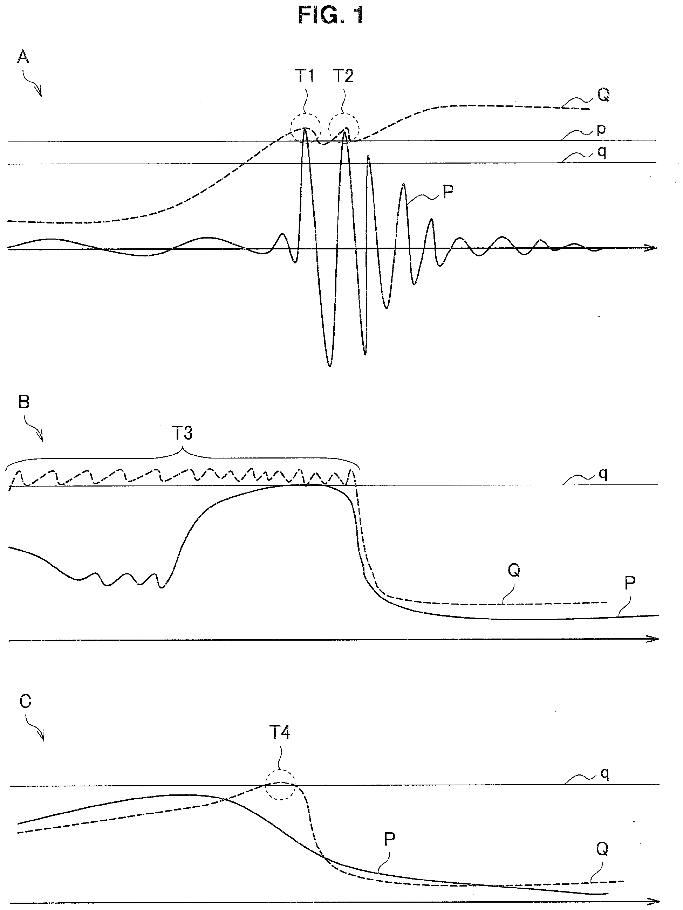

FIG. 1 is an explanatory diagram illustrating an example of the process in the information processing method according to the present embodiment. FIG. 1 illustrates an example of the determination process according to the present embodiment. In FIG. 1, "P" represents an example of the power generation amount, and "p" represents an example of the threshold set for the power generation amount. In addition, in FIG. 1, "Q" represents an example of the power storage amount, and "q" represents an example of the threshold set for the power storage amount.

A chart A in FIG. 1 illustrates an example of the case where the power generation device generates power from vibration, and more specifically, illustrates an example in which the information processing apparatus according to the present embodiment determines that environmental information is to be recorded in the case of "P ≥ p and Q ≥ q". A chart B in FIG. 1 illustrates an example of the case where the power generation device generates power from light, and more specifically, illustrates an example in which the information processing apparatus according to the present embodiment determines that environmental information is to be recorded in the case of "Q ≥ q". A chart C in FIG. 1 illustrates an example of the case where the power generation device carries out thermoelectric power generation, and more specifically, illustrates an example in which the information processing apparatus according to the present embodiment determines that environmental information is to be recorded in the case of "Q ≥ q".

According to the example in the chart A of FIG. 1, the information processing apparatus according to the present embodiment determines that environmental information is to be recorded at T1 and T2 illustrated in the chart A of FIG. 1. According to the example in the chart B of FIG. 1, the information processing apparatus according to the present embodiment determines that environmental information is to be recorded during T3 illustrated in the chart B of FIG. 1. According to the example in the chart C of FIG. 1, the information processing apparatus according to the present embodiment determines that environmental information is to be recorded at T4 illustrated in the chart C of FIG. 1.

For example, as shown in FIG. 1, the information processing apparatus according to the present embodiment determines whether the environmental information is to be recorded by carrying out the threshold process using a set threshold.

The threshold according to the present embodiment may be a fixed value set previously or may be a variable that varies depending on user operations. The threshold according to the present embodiment may include a margin that prevent malfunction, for example.

Examples of the threshold according to the present embodiment include output voltage, current, power, energy, and various physical quantities of the power generation device. In addition, the threshold according to the present embodiment may relate to absolute values, relative values, temporal change amounts, or periods/regularities, for example.

### (2) Recording Control Process

When, in the process (1) (determination process), it is determined that the environmental information is to be recorded, the information processing apparatus according to the present embodiment records the environmental information in the recording medium by carrying out a process relating to the recording of the environmental information.

In the case where the recording medium according to the present embodiment is a recording unit (to be described later), the information processing apparatus according to the present embodiment records environmental information in the recording unit (to be described later). In the case where the recording medium according to the present embodiment is a connected external recording medium, a recording medium in an external apparatus, or a recording medium connected to an external apparatus, the information processing apparatus according to the present embodiment transmits, to the external apparatus, environmental information and a control signal including a recording request to cause the recording medium to carry out recording, and causes the external apparatus to record the environmental information, for example. The control signal and the environmental information are transmitted, for example, via the communication unit (to be described later) included in the information processing apparatus according to the present embodiment, or the connected external communication device. In other words, "recording of environmental information in the recording medium" during the recording control process according to the present embodiment means that "the information processing apparatus according to the present embodiment records the environmental information in the recording medium" or that "the information processing apparatus according to the present embodiment causes the external device to record the environmental information in the recording medium", for example.

### (2-1) First Example of Process relating to Recording of Environmental Information: Case where Information relating to Image Capturing is Recorded in Recording Medium as Environmental Information

The information processing apparatus according to the present embodiment causes the imaging device to capture an image. Subsequently, the information processing apparatus according to the present embodiment records information relating to the image capturing in the recording medium as the environmental information, the information being acquired by the image capturing carried out by the imaging device.

For example, the information processing apparatus according to the present embodiment acquires the information relating to image capturing from the imaging device by transmitting, to the imaging device, a control signal including an image capturing request to capture an image and a transmission request to transmit the information relating to image capturing. The control signal is transmitted, for example, via the signal line in the information processing apparatus according to the present embodiment, the communication unit (to be described later) included in the information processing apparatus, and the connected external communication device.

### (2-2) Second Example of Process relating to Recording of Environmental Information: Case where Information relating to Time when it is Determined that Environmental Information is to be Recorded is Recorded in Recording Medium as Environmental Information

The information processing apparatus according to the present embodiment records, in the recording medium, the information relating to time when it is determined that the environmental information is to be recorded.

When, in the process (1) (determination process), it is determined that the environmental information is to be recorded, the information processing apparatus according to the present embodiment generates the information relating to time when it is determined that the environmental information is to be recorded, for example. Subsequently, the information processing apparatus according to the present embodiment records, in the recording medium, the generated information relating to time when it is determined that the environmental information is to be recorded.

### (2-3) Third Example of Process relating to Recording of Environmental Information

As the process relating to recording of environmental information, the information processing apparatus according to the present embodiment is also capable of carrying out a process carried out by combining the process relating to recording of environmental information according to the first example and the process relating to recording of environmental information according to the second example.

### (2-4) Fourth Example of Process relating to Recording of Environmental Information: Case where Detection Information is Further Recorded in Recording Medium as Environmental Information

In addition to the process similar to any of the process relating to recording of environmental information according to the first example to the process relating to recording of environmental information according to the third example, the information processing apparatus according to the present embodiment further records, in the recording medium, the detection information acquired when it is determined that the environmental information is to be recorded. For example, the information processing apparatus according to the present embodiment records "a piece of detection information acquired in the case where it is determined that the environmental information is to be recorded, among pieces of detection information successively transmitted by a sensor", "detection information acquired from the sensor in the case where it is determined that the environmental information is to be recorded", and the like, in the recording medium.

### (3) Function Control Process

As described above, the information processing apparatus according to the present embodiment is also capable of controlling the operating state. Examples of the operating state controlled in the function control process by the information processing apparatus according to the present embodiment include "an operating state of a device that operates using power generated by the power generation device and/or power stored in the power storage device", and "an operating state of the information processing apparatus according to the present embodiment".

Hereinafter, an example of the function control process according to the present embodiment is described while the case where the information processing apparatus according to the present embodiment controls the operating state of the imaging device and the operating state of the information processing apparatus according to the present embodiment is mainly used as an example. Note that, of course, the "device that operates using power generated by the power generation device and/or power stored in the power storage device" according to the present embodiment is not limited to the imaging device. The information processing apparatus according to the present embodiment is also capable of controlling one of the operating state of the imaging device and the operating state of the information processing apparatus according to the present embodiment.

For example, the information processing apparatus according to the present embodiment causes the imaging device to carry out an image capturing operation corresponding to a determined image capturing mode on the basis of a combination of image capturing conditions (image capturing condition A to image capturing condition D) as described below and image capturing modes that decide operations (image capturing mode a to image capturing mode e (an example of the operating states of the device)) as described below, where "P" represents the power generation amount, "p" represents a threshold set for the power generation amount, "Q" represents the power storage amount (total amount of generated power), and "q" represents a threshold set for the power storage amount. Examples of the combination of the image capturing condition and the image capturing mode include a fixed combination that has been set previously, a combination that has been manually set on the basis of a user operation, and a combination that has been automatically set by the information processing apparatus according to the present embodiment on the basis of a state of a running application.

### <Image Capturing Condition>

- Image capturing condition A: regardless of P or Q
- Image capturing condition B: when P satisfies a certain condition with respect to p
- Image capturing condition C: when Q satisfies a certain condition with respect to q
- Image capturing condition D: when both P and Q satisfy certain conditions with respect to p and q according to the invention

### <Image Capturing Mode>

- Image capturing mode a: continue capturing images
- Image capturing mode b: capture images specified number of times
- Image capturing mode c: capture a still image or a moving image at a constant period (intermittently activating mode)
- Image capturing mode d: capture a still image or a moving image at any period
- Image capturing mode e: capture a still image or a moving image at any timing

The information processing apparatus according to the present embodiment uses a component for changing the operation of the imaging device by the threshold process using the threshold according to the present embodiment. Examples of the component include accuracy of position information acquisition, frequency of the position information acquisition, sensitivity of a collateral sensor, an amount of light from a light source, intervals between shutter clicks, shutter speed, sensitivity, resolution, frequency of image capturing, the number of captured images in single-time image capturing, image effect, a data compression method, frequency of data communication, data traffic, and various kinds of control. For example, the information processing apparatus according to the present embodiment changes the operation of the imaging device by "controlling a multi-phase clock relating to the operating mode of the information processing apparatus according to the present embodiment as described below and changing the operation of the image capturing device" or by "independently controlling ON/OFF of each of the components or collectively controlling ON/OFF of the components". Of course, the component used by the information processing apparatus according to the present embodiment for changing the operation of the imaging device is not limited to the above example.

In addition, the information processing apparatus according to the present embodiment is also capable of changing an operating mode of the information processing apparatus according to the present embodiment on the basis of one or both of a power generation amount and a power storage amount. Examples of the operating mode of the information processing apparatus according to the present embodiment are as follows. Note that, the examples of the operating mode of the information processing apparatus according to the present embodiment are not limited to the following examples. For example, the operating mode of the information processing apparatus according to the present embodiment may include an intermittently-activating operating mode (hereinafter, referred to as the "intermittently activating mode") and a timer-activating operating mode (hereinafter, referred to as the "timer activating mode").

### <Example of Operating Mode of Information Processing Apparatus according to Present Embodiment>

- Operating mode 1: complete shutdown
- Operating mode 2: deep sleep (state where the control unit (to be described later) of the information processing apparatus according to the present embodiment is operated by CLK1)
- Operating mode 3: sleep (state where the control unit (to be described later) is operated by CLK2)
- Operating mode 4: standby (state where the control unit (to be described later) is operated by CLK3)
- Operating mode 5: image capturing mode (state where the entire information processing apparatus according to the present embodiment is operated by CLK3)

CLK1 is supplied to a section including only the control unit (to be described later), for example. CLK2 is supplied to the same section as CLK1, but "frequency of CLK2 > frequency of CLK1", for example. CLK3 is supplied to a section including a structural element other than the control unit (to be described later), and "frequency of CLK3 ≥ frequency of CLK2", for example.

As an example of control of the operating state of the information processing apparatus according to the present embodiment, the information processing apparatus according to the present embodiment determines "a situation where a user unintentionally generate power by natural movement" or "a situation where the user intentionally generate power" on the basis of one or both of a power generation amount and a power storage amount, for example. The information processing apparatus according to the present embodiment carries out the above described determination on the basis of one or both of an amount of change in the generated power and an amount of change in the stored power.

In the case where it is determined that the user is unintentionally generating the power, the information processing apparatus according to the present embodiment sets the operating mode of the information processing apparatus according to the present embodiment to the sleep mode or the intermittently activating mode, for example. In the case where it is determined that the user is intentionally generating the power, the information processing apparatus according to the present embodiment sets the operating mode of the information processing apparatus according to the present embodiment to the standby mode or the sleep mode, for example.

In the intermittently activating mode, a system of the information processing apparatus according to the present embodiment operates when power to carry out the timer activating mode and to boot the system of the information processing apparatus according to the present embodiment is stored, for example. Alternatively, the intermittently activating mode becomes the sleep mode by using a result of monitoring the power storage amount as a trigger.

As described above, since the information processing apparatus according to the present embodiment controls the operating mode of the information processing apparatus according to the present embodiment, it is possible to achieve an image capturing method by which images are automatically captured regardless of the user's intention directly, in addition to an image capturing method by which images are captured when the user wants to captures the images, for example. Accordingly, since the information processing apparatus according to the present embodiment carries out the function control process according to the present embodiment, it is possible to "change the state of an intermittent operation on the basis of the power generation state of the power generation device" or to "automatically capture an image not periodically but according to a state of power generation by the user or the like", for example.

### (3-1) Example of Operation of Information Processing Apparatus according to Present Embodiment which Carries out Function Control Process according to Present Embodiment

Hereinafter, an example of the operation of the information processing apparatus according to the present embodiment which carries out the function control process according to the present embodiment is described while the "case where an image is captured when there is a large vibration such as the case where an image is captured when exercise stress is applied to a human body such as sports" is used as an example. In the following example, the information processing apparatus according to the present embodiment includes the power generation device and the image capturing device, and the information processing apparatus according to the present embodiment is a wearable apparatus worn by a user.

For example, when amplitude of vibration and a vibration period exceeds amplitude and a period during the user's normal walking, output voltage of the power generation device that generates power by the vibration is greater than or equal to a set threshold. In this case, the image should be captured with a high shutter speed. This is because the large vibration means that acceleration highly acts on the imaging device, it is estimated that this is the situation in which a large displacement occurs in a short time in a position where the power generation device is worn, in other words, and it is estimated that an image is largely blurred when the image is captured.

Accordingly, for example, a shutter speed adjustment circuit and output voltage of the power generation device have to be connected directly or via a switch circuit or a more complex arithmetic circuit, and it is necessary to control switching of control CLKs, switching of the operating modes, or the like.

In addition, a large acceleration and short vibration period enables an environment where larger power is obtained as an environment where power is generated by vibration. At the same time, this means the situation where the power generation device is displaced at a high speed. In the case where there is a regularity/periodicity under this situation, the power generation device is in an environment where the same vibration is applied repeatedly. In other words, the power generation device is mainly worn during simple sports with a constant period vibration such as jogging and training. At this time, an image captured by the imaging device of the information processing apparatus according to the present embodiment is, for example, a dull image or an easily predictable image.

In the case where the information processing apparatus according to the present embodiment includes a position detecting device capable of acquiring position information indicating a position of a Global Positioning System (GPS) device or the like, the information processing apparatus according to the present embodiment is capable of detecting at least whether a user carries out repeating movements in the same place or the user travels at a constant speed, from the positional information and an output state of the power generation device, for example.

In the case where it is determined that the user carries out repeating movements in the same place, the information processing apparatus according to the present embodiment lengthens the intervals between shutter clicks, for example. In order to capture an image of difference between changes with high resolution, an image is preferably captured with shifted periods. Accordingly, the information processing apparatus according to the present embodiment captures an image with inconstant intervals between shutter clicks, for example.

Alternatively, in the case where it is determined that the user travels at a constant speed, an image may be captured at a constant period using external CLK regardless of output from the power generation device. By capturing the image at the constant period using CLK, an output determination circuit of the power generation device does not have to be operated, and a necessary image is acquired while cutting an electric power consumption more. Also in this case, in preparation for change from a state of traveling at a constant speed to another state, for example, a shutter ON/OFF switch and output voltage of the power generation device have to be connected directly or via a switch circuit or a more complex arithmetic circuit, and it is necessary to control switching of control CLKs, switching of the modes, or the like.

The case where there is no period/regularity in the amplitude of vibration and the period means that a complex movement is carried out in an environment around a place where the power generation device is installed. Accordingly, it is estimated that images captured by the imaging device of the information processing apparatus according to the present embodiment are different from each other. Therefore, when the intervals between image capturing carried out by the imaging device of the information processing apparatus according to the present embodiment is shorter, it is possible to record the difference between change in space and time in more details, the information processing apparatus including the power generation device. In this case, for example, an adjustment mechanism and output of the power generation device have to be connected directly or via a switch circuit or a more complex arithmetic circuit, and it is necessary to control switching of control CLKs, switching of the modes, or the like, the adjustment mechanism relating to a shutter speed, the number of images captured at one time, and image correction such as blur correction.

In elements for carrying out thermal power generation (elements constituting the power generation device that carries out thermoelectric power generation), electromotive force is generated by thermal flow occurring inside the elements in common with each of the elements. The thermal flow occurs due to spatial difference or temporal difference in temperature applied to the elements. The spatial difference in temperature is spatial difference in temperature between certain parts of the elements at the same time. The temporal difference in temperature is temporal difference in temperature during ΔT where difference in time from a certain time is set to ΔT. Substantially, the difference in temperature is obtained by combining them. When reference temperature to the difference in temperature is found out, it is possible to carry out evaluation with absolute temperature.

Example of an affector of change in the difference in temperature of the power generation device include "change in contact thermal resistance according to change in a condition of contact between an installation surface and a target of installation", "heat capacity of a contact target", "difference in temperature (change in place of contact, for example)", "change in a medium of a surface of the power generation device (change from gas to liquid, change from liquid to gas, or transformation to different liquid or gas, for example)", "flow rate of medium ", "flow state such as turbulent flow or laminar flow of the medium", and "difference in emissivity of a non-contact target (for example, a thing placed in a range scale in which exchange of radiation energy with the power generation device affects the output enough is changed)". Output voltage of the power generation device and a degree of effect on power of each of the affectors varies. However, the affectors having relatively large effects have large difference in a contact target of the power generation device, large difference in a medium of a surface of the power generation device, and large change in a flow velocity, turbulent flow, or laminar flow of the medium.

Hereinafter, the above described matters relating to the thermoelectric power generation is set to common premises in the case where the thermoelectric power generation is carried out.

For example, when the user wants change in behavior of the information processing apparatus according to the present embodiment to reflect the affector having large effect, thresholds of the output voltage, current, power, energy of the power generation device are set to larger values with sufficient margin in view of the effects of the affector. Alternatively, for example, when the change in behavior of the information processing apparatus according to the present embodiment reflects the affector having small effect, the output voltage, current, power, energy of the power generation device by the affector having large effect are filtered. Subsequently, a double threshold process may be carried out such as output threshold determination carried out only when output is so small that it is determined that there is no effect of the affector having large effect.

With regard to the behavior of the information processing apparatus according to the present embodiment in response to the output state of the power generation device, for example, an environment with a constant difference in temperature, in other words, an environment with a constant output voltage and a constant power generation amount of power generated by heat indicates that an environment around a place where the power generation device is installed is an environment where the spatial difference and temporal difference in temperature are equable and the temperature is stable. At this time, the imaging device of the information processing apparatus according to the present embodiment captures an image of the scene where there is a little air convection such as inside of a room, the scene where there is a certain convection, the scene where there is no relative change between the power generation device and a surrounding object in contact with the power generation device, or the like; the image captured by the imaging device is a dull image or an easily predictable image.

In such a case, the information processing apparatus according to the present embodiment lengthens the intervals between shutter clicks. In other words, for example, images should be captured at a constant period using external CLK regardless of output from the power generation device. Accordingly, for example, a shutter ON/OFF switch, output voltage of the power generation device, and output for a power storage amount monitor of a storage battery have to be connected directly or via a switch circuit or a more complex arithmetic circuit, and it is necessary to control switching of control CLKs, switching of the modes, or the like.

In addition, it is easily estimated that the state of the power generation device is a state where the power generation device is in a room or in a medium such as water, in which temperature hardly changes, and flow is constant. Accordingly, high sensitivity is necessary and/or it is desirable that a shutter speed is relatively slowed down and exposure time is lengthened. Therefore, it is also necessary to control the shutter speed in a way similar to the intervals between shutter clicks.

On the other hand, in the case where difference in temperature is not equable, in other words, in an environment with a non-constant output voltage and a non-constant power generated by heat, an environment around a place where the power generation device is installed is an environment where the spatial difference or temporal difference in temperature is not equable.

In the case where the output voltage and power shows a certain regularity/periodicity, for example, it is determined that the environment where the power generation device is installed is an environment where power is generated by periodic change in temperature due to a man-made source, by setting period as a threshold. Accordingly, in the above described case, it is highly possible that the environment is inside of a room.

In the case of long-period regularity, it is highly possible that power is generated by periodic change in temperature due to a natural environment such as change in temperature between day and night, and seasonal change in temperature. In the case where there is no power generation characteristic by short-period periodic change in temperature, it is highly possible that an environment is "inside of a room whose temperature is not controlled", "outdoors with a stable environment", or the like. In this case, an image supposed to be the image captured by the imaging device of the information processing apparatus according to the present embodiment basically corresponds to a dull image in which temperature has not been changed as described above.

However, in the case where there is periodic change in temperature due to the natural environment, the images captured by the imaging device of the information processing apparatus according to the present embodiment is, for example, images in which an environment is changed at a very long intervals. When the images are captured at a changing point in the above case, it is estimated that surrounding environments differ widely. More specifically, it is assumed that brightness differs widely. Accordingly, in the above case, output voltage of the power generation device, and output for a power storage amount monitor of a storage battery have to be connected to a sensitivity adjustment mechanism included in the information processing apparatus according to the present embodiment, and a circuit relating to shutter speed included in the information processing apparatus according to the present embodiment directly or via a switch circuit or a more complex arithmetic circuit, and it is necessary to control switching of control CLKs, switching of the modes, or the like.

In the case where the output voltage or power does not show any regularity/periodicity, the output voltage is set as a threshold, for example. At this time, when the output voltage is larger, the environment changes more dynamically. More specifically, the large output voltage indicates that an amount of change in relative position between a site where the power generation device is installed and a surrounding site is great. In this case, images captured by the imaging device of the information processing apparatus according to the present embodiment are, for example, images with large spatial change or temporal change. Accordingly, for example, a mechanism relating to a shutter speed, a mechanism relating to the number of images captured at one time, a mechanism relating to image blur correction, a sensitivity adjustment mechanism, and output of the power generation device have to be connected directly or via a switch circuit or a more complex arithmetic circuit, and it is necessary to control switching of control CLKs, switching of the modes, or the like. In addition, for example, since the environment is changed dynamically with a long-term period, the intervals between shutter clicks should be controlled in a similar way.

In the above description, the case where the information processing apparatus according to the present embodiment includes the power generation device for generating power from vibration or motion, and the case where the information processing apparatus according to the present embodiment includes the power generation device for generating power from heat have been explained. Similar description according to power generation methods is applied to the case where the information processing apparatus according to the present embodiment includes the power generation device for generating a power from light, sugar and enzyme reaction, or electromagnetic wave, or by combining the plurality of power generation methods.

Regardless of the power generation method or the configuration of the information processing apparatus according to the present embodiment including the imaging device, when amounts of change in the output voltage and output power are large in common, for example, an environment around a place where the power generation device is installed changes dynamically. Therefore, it is estimated that there is a large spatial change or temporal change in images captured by image sensors included in the imaging device. Accordingly, for example, the output voltage and power have to be set to thresholds, and it is necessary to adjust mechanisms necessary to be adjusted when a scene changes dynamically according to the setting of the thresholds, the mechanisms relating to the shutter speed, the number of images captured at one time, the image correction such as blur correction, the exposure sensitivity, and the like. Accordingly, output of the power generation device and such adjustment mechanisms have to have to be connected directly or via a switch circuit or a more complex arithmetic circuit, and it is necessary to control switching of control CLKs, switching of the modes, or the like.

On the other hand, in the case where the output voltage and output power show regularity/periodicity, for example, a state of an environment where the power generation device changes depending on a length of period, by setting the period as a threshold.

For example, in the case where the period is short, it is estimated that an image captured by the imaging system is a dull image. In this case, for example, the number of imaged to be captured does not have to be limited, and the intervals between shutter clicks do not have to be lengthened. Accordingly, output of the power generation device and an adjustment mechanism of the intervals between shutter clicks have to be mainly connected directly or via a switch circuit or a more complex arithmetic circuit, and it is necessary to control switching of control CLKs, switching of the modes, or the like.

In the case where the period is long, the intervals until the changing point may be a long term as an image captured by the imaging device of the information processing apparatus according to the present embodiment. However, it is estimated that there is dynamic spatial change or dynamic temporal change at the changing point. Accordingly, for example, in this case, it is necessary to adjust mechanisms necessary to be adjusted when a scene changes dynamically, such as a mechanism relating to the intervals between shutter clicks, the mechanism relating to shutter speed, the mechanism relating to the number of images to be captured, and the mechanism relating to image correction such as blur correction, and a mechanism relating to exposure sensitivity. Accordingly, output voltage of the power generation device and such adjustment mechanisms have to be connected directly or via a switch circuit or a more complex arithmetic circuit, and it is necessary to control switching of control CLKs, switching of the modes, or the like.

### (3-2) Example of Process Carried out by Information Processing Apparatus according to Present Embodiment which Carries out Function Control Process according to Present Embodiment

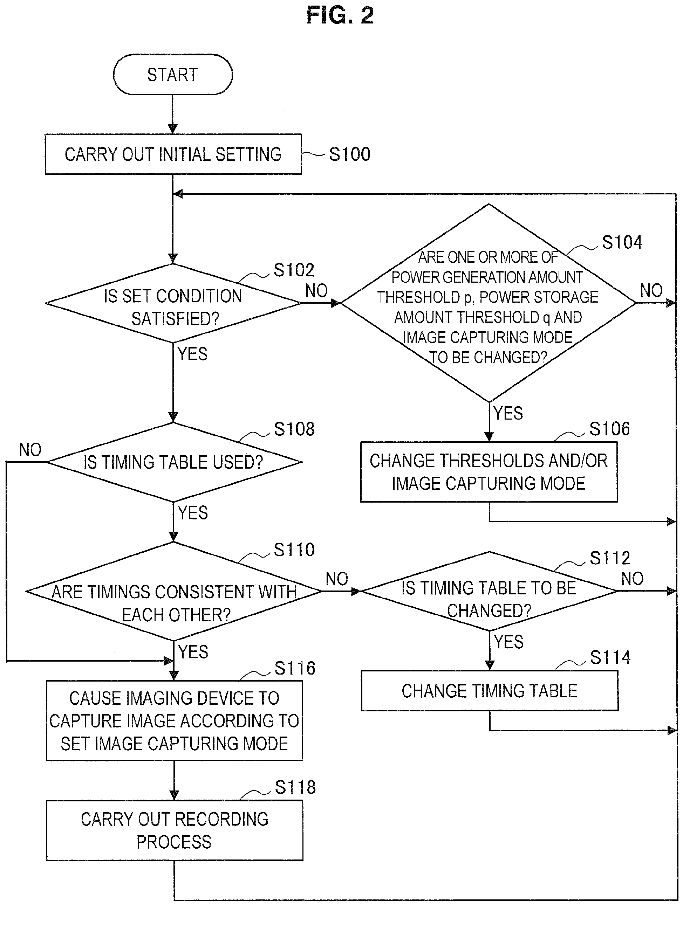

FIG. 2 is an explanatory diagram illustrating an example of a process in an information processing method according to the present embodiment. FIG. 2 illustrates an example of a process carried out by the information processing apparatus according to the present embodiment which carries out a function control process according to the present embodiment. In FIG. 2, a "power generation amount threshold p" represents a threshold set for a power generation amount, and a "power storage amount threshold q" represents a threshold set for the power storage amount.

The information processing apparatus according to the present embodiment carries out an initial setting (S100). After the initial setting, the information processing apparatus according to the present embodiment starts to monitor a power generation amount in the power generation device and a power storage amount in the power storage device.

In the process in Step S100, information on the power generation device such as a power generation method and power generation performance, and information on the imaging device such as power consumed by the imaging device may be acquired from the power generation device, the imaging device, an external device such as a server, or the recording medium, for example.

The information processing apparatus according to the present embodiment determines whether or not a set condition is satisfied, namely "power generation amount P ≥ power generation amount threshold p, and power storage amount Q ≥ power storage amount threshold q", according to the invention (S102).

In the case where it is not determined that the condition set in Step S102 is satisfied, the information processing apparatus according to the present embodiment determines whether or not to change one or more of the power generation amount threshold p, the power storage amount threshold q, the image capturing mode, and the like (S104). The information processing apparatus according to the present embodiment carries out the determination in Step S104 on the basis of one or both of the power generation amount P and the power storage amount Q. Alternatively, for example, the information processing apparatus according to the present embodiment may carry out the determination in Step S104 on the basis of a user operation or a state of a running application.

In the case where it is not determined to change one or more of the power generation amount threshold p, the power storage amount threshold q, the image capturing mode, and the like in Step S104, the information processing apparatus according to the present embodiment repeats the process from Step S102.

In the case where it is determined to change one or more of the power generation amount threshold p, the power storage amount threshold q, the image capturing mode, and the like in Step S104, the information processing apparatus according to the present embodiment changes one or more of the power generation amount threshold p, the power storage amount threshold q, the image capturing mode, and the like which has been determined to be changed (S106). Subsequently, the information processing apparatus according to the present embodiment repeats the process from Step S102.

In the case where it is determined that the condition set in Step S102 is satisfied, the information processing apparatus according to the present embodiment determines whether or not to use the timing table, for example (S108). The timing table according to the present embodiment is data indicating conditions that decides a processing timing. For example, the information processing apparatus according to the present embodiment may carry out the determination in Step S108 on the basis of a setting of whether or not to use the timing table based on a state of a running application or a user operation.

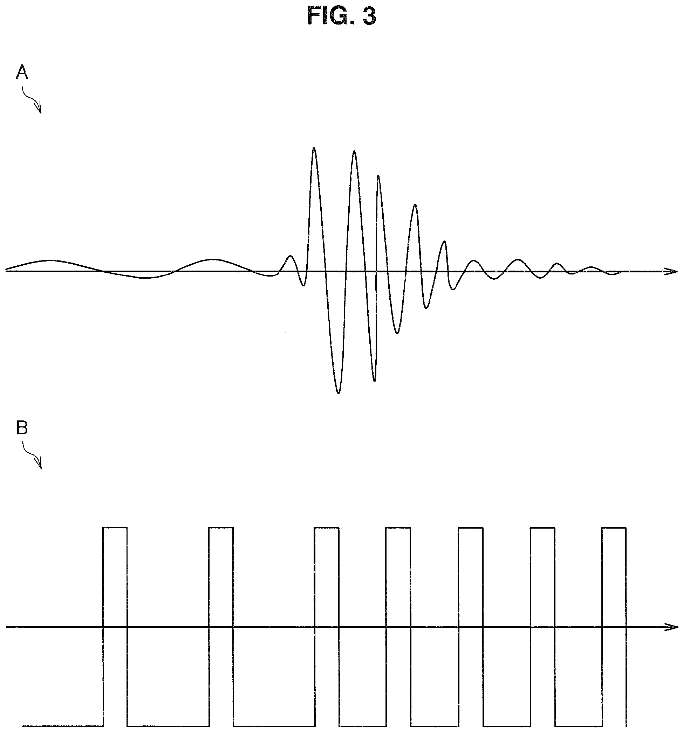

FIG. 3 is an explanatory diagram illustrating an example of a condition that decides the processing timing decided by the timing table according to the present embodiment. A chart A in FIG. 3 illustrates an example of a power generation amount of power generated by the power generation device that generates power from vibration. A chart B in FIG. 3 illustrates a clock indicating the processing timing decided by the timing table according to the present embodiment.

The information processing apparatus according to the present embodiment carries out the process in the case where the power generation amount is greater than or equal to a set threshold and a clock based on the timing table according to the present embodiment is in the on-state (at a high level), for example. The information processing apparatus according to the present embodiment may use a clock input from an outside instead of the clock based on the timing table, for example.

With reference to FIG. 2 again, an example of a process carried out by the information processing apparatus according to the present embodiment which carries out a function control process according to the present embodiment is described. In the case where it is not determined to use the timing table in Step S108, the information processing apparatus according to the present embodiment carries out a process in Step S116 (to be described later).

In the case where it is determined to use the timing table in Step S108, the information processing apparatus according to the present embodiment determines whether or not timings are consistent with each other (S110). The information processing apparatus according to the present embodiment determines that the timings are consistent with each other in the case where timings when clocks based on the timing table are in the on-state are consistent with each other, for example.

In the case where it is not determined that the timings are consistent with each other in Step S110, the information processing apparatus according to the present embodiment determines whether or not to change the timing table (S112). For example, the information processing apparatus according to the present embodiment may carry out the determination in Step S112 on the basis of a user operation or a state of a running application.

In the case where it is not determined to change the timing table in Step S112, the information processing apparatus according to the present embodiment repeats the process from Step S102.

In the case where it is determined to change the timing table in Step S112, the information processing apparatus according to the present embodiment changes the timing table to another timing table stored in the recording medium such as the storage unit (to be described later) (S114), and repeats the process from Step S102.

In the case where it is not determined to use the timing table in Step S108, or in the case where it is determined that the timings are consistent with each other in Step S110, the information processing apparatus according to the present embodiment causes the imaging device to capture an image according to a set image capturing mode (S116). Examples of the set image capturing mode include the image capturing mode a to the image capturing mode e, for example.

In addition, the information processing apparatus according to the present embodiment records time when the image has been captured, the power generation amount P relating to the image capturing, the power storage amount Q, the power generation amount threshold p, and the power storage amount threshold q in the recording medium, for example (S118).

After carrying out the processes in Steps S116 and S118, the information processing apparatus according to the present embodiment repeats the process from Step S102.

In the case where the function control process according to the present embodiment is carried out, the information processing apparatus according to the present embodiment carries out the process in FIG. 2, for example.

Note that, the process carried out by the information processing apparatus according to the present embodiment in the case where the function control process according to the present embodiment is carried out is not limited to the example in FIG. 2. For example, in the case where the timing table is not used, the information processing apparatus according to the present embodiment does not have to carry out the processes in Steps S108 to S114 shown in FIG. 2.

### [3] Application Example of Information Processing Apparatus according to Present Embodiment which Carries out Process relating to Information Processing Method according to Present Embodiment

Next, an application example of the information processing apparatus according to the present embodiment which carries out the process relating to the information processing method according to the present embodiment is described.

### (I) First Application Example: Car Driving Recorder

In the case where the information processing apparatus according to the present embodiment is applied to a car driving recorder, the information processing apparatus according to the present embodiment includes one or more of the vibration or motion powered generator for generating power on the basis of acceleration (an example of power generation device), the photovoltaic cell including a photoelectric conversion element for generating power from light (an example of power generation device), and the thermoelectric conversion element for generating power on the basis of difference in temperature (an example of power generation device), for example.

For example, the information processing apparatus according to the present embodiment according to the first application example generates power from vibration and store the power in the power storage device. More specifically, for example, in the case where a car to which the information processing apparatus according to the present embodiment according to the first application example is mounted drives normally, the information processing apparatus according to the present embodiment stores power in the power storage device, and when an excessive amount of power is stored (for example, the power storage amount is greater than or equal to a set threshold), sets the image capturing mode to the continuous image capturing mode.

Alternatively, for example, when the power is greater than or equal to a threshold corresponding to power enough to capture an image, the information processing apparatus according to the present embodiment may set the image capturing mode to the intermittently activating mode (corresponding to a combination of the image capturing condition C and the image capturing mode c). Alternatively, in a situation where the power generation amount is estimated to be large, for example, the information processing apparatus according to the present embodiment is capable of setting the image capturing mode to the image capturing mode in which images are captured a certain number of times (corresponding to a combination of the image capturing condition B and the image capturing mode b) on the basis of the image capturing condition B.

For example, in the case where the information processing apparatus according to the present embodiment according to the first application example includes an image capturing device for each section in one or more of the power generation devices, a user can obtain various information from recorded environmental information according to the present embodiment, the various information including image capturing frequency of recorded images until an accident has happened, an impact level, brightness of a surrounding environment when the image has been captured, and temperature.

### (II) Second Application Example: Pet Monitoring Camera (Example of Monitoring of Physical Activity)

In the case where the information processing apparatus according to the present embodiment is applied to a pet monitoring camera, the information processing apparatus according to the present embodiment includes one or more of the vibration or motion powered generator for generating power on the basis of acceleration (an example of power generation device), the photovoltaic cell including a photoelectric conversion element for generating power from light (an example of power generation device), the thermoelectric conversion element for generating power from difference between body temperature and temperature of a surrounding environment (an example of power generation device), the power generation device for generating power from sugar and enzyme reaction, the power generation device for generating power from radio waves, and the power generation device for transmitting power, for example.

For example, the information processing apparatus according to the present embodiment according to the second application example stores power generated in an environment in which a creature is placed in the power storage device, and activate the imaging device by using the power stored in the power storage device.

While tracking and monitoring of wild bird's behavior are used as a use case, the case where power is stored in the power storage device and an image is captured is described, the power being generated from difference between body temperature of the wild bird and temperature of a surrounding environment, from light such as sunlight, or from vibration. When the device has consumed entire power stored in the power storage device in the above case, the power storage device should be replaced by catching the wild bird to recharge the power storage device, normally. On the other hand, the information processing apparatus according to the present embodiment according to the second application example is capable of operating depending on the power generation amount of the power generation device. Accordingly, even in the case where the device is worn by a difficult animal to get electric power supply, it is possible to monitor physical activities of the animal.

In addition, in the case where the information processing device includes a plurality of the power generation devices, it is possible to determine whether or not a current situation is daytime, from a certain amount of change in power generated from the difference in temperature (in other words, change in environmental temperature) or change in a power generation amount of power generated by light (in other words, change in an amount of sunlight) during a situation where a little power is generated from vibration. Accordingly, in the case where the information processing device includes a plurality of the power generation devices, it is possible to determine that an environment where the wild bird is placed changes, and the information processing device according to the present embodiment captures an image in an image capturing mode depending on a result of the determination, such as capturing of images specified number of times, for example (corresponding to a combination of the image capturing condition D and the image capturing mode d).

Next, for example, the case where a pet cat wears the vibration or motion powered generator for generating power on the basis of acceleration (an example of power generation device) and a system including the image capturing device is described. In this case, for example, the information processing apparatus according to the present embodiment according to the second application example captures an image when an amount of activity of the free-range cat is greater than or equal to a set threshold (corresponding to a combination of the image capturing condition B and the image capturing mode b). In this case, for example, the user recognizes the amount of activity of the cat from the number of captured images. In addition, for example, data of the amount of activity may be used for pet insurance.

In addition, for example, in the case where the system includes only the power generation device for generating power from difference between body temperature and air temperature, or in the case where the system includes a plurality of power generation devices but only the power generation device for generating power from the difference between body temperature and air temperature is used as a main power source of the system, when the creature is dead, the difference between body temperature and air temperature become smaller than that when the creature is alive. Accordingly, energy and power (voltage and current) generated by the power generation device become smaller. Therefore, when the creature is dead, a frequency of image capturing carried out by the imaging device is extremely smaller than that when the creature is alive. On the other hand, in the case where the system includes the power generation device for generating power from light and the power generation device for generating power from difference in temperature, or the case where the main power source includes the power generation device for generating power from light, the imaging device regularly captures an image even when the creature is dead. The frequency of image capturing changes in comparison with the case where the system includes only the power generation device for generating power from difference in temperature, or the case where the system includes a plurality of power generation devices but only the power generation device for generating power from the difference between body temperature and air temperature is used as a main power source of the system. As described above, when it is determined that the creature is dead, different image capturing process can be selected depending on the power generation devices included in the system. At this time, for example, the former case is applied when the user wants to stop operation at the time of the creature's death or when the user wants to decrease frequency of operation at the time of the creature's death. On the other hand, the latter is applied when the user wants the device to operate or to keep a certain frequency of operation even at the time of the creature's death.

### (III) Third Application Example: Diary Camera

In the case where the information processing apparatus according to the present embodiment is applied to a diary camera, the information processing apparatus according to the present embodiment includes the vibration or motion powered generator for generating power on the basis of acceleration (an example of power generation device) and the imaging device, for example.

For example, the information processing apparatus according to the present embodiment according to the third application example generates power from walking and captures an image when image capturing is possible (corresponding to a combination of the image capturing condition C and the image capturing mode a). In the case where an amount of exercise is large, the number of captured images increase and the intervals between image capturing become short. In addition, the intervals between image capturing become short depending on moving speed.

Ideally, the information processing apparatus according to the present embodiment according to the third application example is capable of intermittently capturing images according to a moving distance regardless of the moving speed, and does not capture any image when the information processing device does not move. The information processing apparatus according to the present embodiment according to the third application example is capable of capturing images regardless of user's intention.

For example, in the case where the information processing apparatus according to the present embodiment according to the third application example includes the communication unit (to be described later) or is connected to a communication device using various communication method, it is possible to upload data to an external apparatus such as a server or a smartphone. In addition, it is also possible to automatically generate a diary, for example, by transmitting the uploaded data to a service providing apparatus such as a server for providing service such as a blog and a social networking service (SNS), for example. Note that, a process relating to the generation of the diary is not limited to the process carried out by the service providing apparatus. For example, the process relating to the generation of the diary may be carried out by the information processing apparatus according to the present embodiment according to the third application example.

### (IV) Fourth Application Example: Underwater Camera

In the case where the information processing apparatus according to the present embodiment is applied to an underwater camera, the information processing apparatus according to the present embodiment includes the vibration or motion powered generator for generating power on the basis of acceleration (an example of power generation device), the photovoltaic cell including a photoelectric conversion element for generating power from light (an example of power generation device), the imaging device, and a position detection device, for example.

For example, the information processing apparatus according to the present embodiment according to the fourth application example is put into the sea or river, and moves along the tide in the sea or the flow of the river. In this case, for example, the information processing apparatus according to the present embodiment according to the fourth application example captures an image a few times when the power storage amount is greater than or equal to an amount of power necessary for capturing the image (corresponding to a combination of the image capturing condition C and the image capturing mode b). In addition, the information processing apparatus according to the present embodiment according to the fourth application example may activate the position detection device and transmit position information to an external device, when the image capturing condition B and a certain condition are satisfied, for example.

### (V) Fifth Application Example: Agriculture Monitoring Camera (Example of Fixed-Point Observation Camera at Site where it is Difficult to Get Electric Power Supply)

In the case where the information processing apparatus according to the present embodiment is applied to an agriculture monitoring camera, the information processing apparatus according to the present embodiment includes one or more of the power generation device for generating power from sugar and enzyme reaction, the photovoltaic cell including a photoelectric conversion element for generating power from light (an example of power generation device), the thermoelectric conversion element for generating power on the basis of difference in temperature (an example of power generation device), and the power generation device for generating power from radio waves, for example. The information processing apparatus according to the present embodiment according to the fifth application example includes the imaging device, for example.

In the case where the agriculture monitoring camera is used, for example, a user is capable of recognizing states of farmlands, livestock, and the like from a captured image. However, usually the agriculture monitoring camera is used for multipoint monitoring, and therefore it costs too much to maintain the system due to replacement of batteries and the like.

On the other hand, for example, in the case where the information processing apparatus according to the present embodiment according to the fifth application example includes the power generation device for generating power from sugar and enzyme reaction, the power is generated from component supplied from outside (crops or soil). Accordingly, it is not necessary to get a fuel supply. Even in the case where the information processing apparatus according to the present embodiment according to the fourth application example includes another power generation device, it is not necessary to get the fuel supply in a similar way.

For example, when the power storage device stores power enough to capture images, the information processing apparatus according to the present embodiment according to the fifth application example intermittently activates the processing unit at time intervals set in advance to capture images (corresponding to a combination of the image capturing condition C and the image capturing mode c).

Alternatively, for example, the information processing apparatus according to the present embodiment according to the fifth application example may measure the generated power, and when an amount of the power satisfies a certain condition, may capture an image once (corresponding to a combination of the image capturing condition D and the image capturing mode b). By recording the captured images as environmental information, the user can remotely recognize sugar content of the crops and the state of the soil from the captured images, for example.

Application examples of the information processing apparatus according to the present embodiment include the first application example in (I) to the fifth application example in (V). Of course, the application examples of the information processing apparatus according to the present embodiment are not limited to the above examples.

### (Information Processing Apparatus according to Present Embodiment)

Next, an example of a configuration example of the information processing apparatus according to the present embodiment which carries out the process relating to the information processing method according to the present embodiment is described.

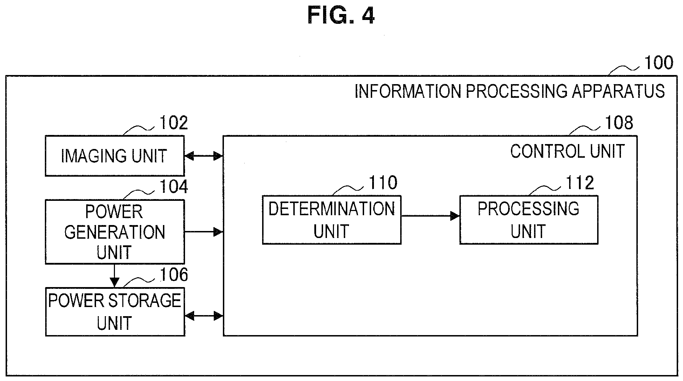

FIG. 4 is a block diagram illustrating an example of a configuration of an information processing apparatus 100 according to the present embodiment. The information processing apparatus 100 includes an imaging unit 102, a power generation unit 104, a power storage unit 106, and a control unit 108, for example.

In addition, the information processing apparatus 100 may include read only memory (ROM) (not illustrated), random access memory (RAM) (not illustrated), a storage unit (not illustrated), an operation unit (not illustrated) operated by a user, and a display unit (not illustrated) for issuing a notification by lighting or for displaying various screens on a display screen, for example. In the information processing apparatus 100, each of the structural elements are connected via a bus serving as a data transmission channel, for example.

The ROM (not illustrated) stores a program used by the control unit 108 and control data such as an operation parameter. The RAM (not illustrated) temporarily stores the program and the like executed by the control unit 108.

The storage unit (not illustrated) is a storage mechanism included in the information processing apparatus 100. For example, the storage unit stores various kinds of data such as an application and data relating to the information processing method according to the present embodiment such as the timing table. Examples of the storage unit (not illustrated) include a magnetic recording medium such as a hard disk, and nonvolatile memory such as flash memory. The storage unit (not illustrated) may be detachably attached to the information processing apparatus 100.

Examples of the operation unit (not illustrated) include an operation input device (to be described later). Examples of the display unit (not illustrated) include a display device (to be described later).

### [Hardware Configuration Example of Information Processing Device 100]

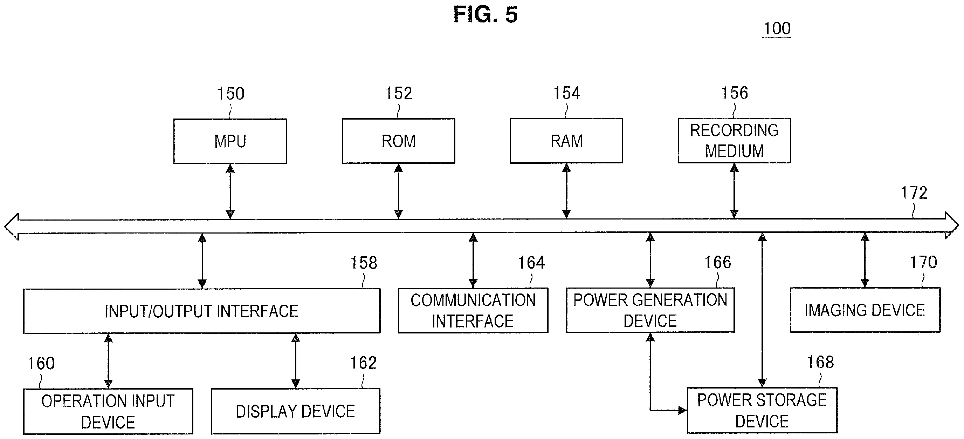

FIG. 5 is an explanatory diagram illustrating an example of a hardware configuration of the information processing apparatus 100 according to the present embodiment. The information processing apparatus 100 includes an MPU 150, ROM 152, RAM 154, a recording medium 156, an input/output interface 158, an operation input device 160, a display device 162, a communication interface 164, a power generation device 166, a power storage device 168, and an imaging device 170, for example. In the information processing apparatus 100, each of the structural elements are connected via a bus 172 serving as a data transmission channel, for example.

For example, the MPU 150 is constituted of various kinds of processing circuits and a processor including various kinds of operational circuits such as a micro processing unit (MPU). The MPU 150 functions as the control unit 108 that controls the entire information processing apparatus 100. In addition, in the information processing apparatus 100, the MPU 150 also serves as the determination unit 110 (to be described later) and the processing unit 112 (to be described later), for example.

The ROM 152 stores programs used by the MPU 150, control data such as operation parameters, and the like. The RAM 154 temporarily stores programs and the like executed by the MPU 150, for example.

The recording medium 156 functions as the storage unit (not illustrated). For example, the recording medium stores various kinds of data such as an application and data relating to the information processing method according to the present embodiment such as the timing table. Examples of the recording medium 156 include a magnetic recording medium such as a hard disk, and nonvolatile memory such as flash memory, for example. The recording medium 156 may be detachably attached to the information processing apparatus 100.

The input/output interface 158 connects the operation input device 160 and the display device 162, for example. The operation input device 160 functions as the operation unit (not illustrated), and the display device 162 functions as the display unit (not illustrated). Examples of the input/output interface 158 include a universal serial bus (USB) terminal, a digital visual interface (DVI) terminal, a High-Definition Multimedia Interface (HDMI) (registered trademark) terminal, and various kinds of processing circuits.

The operation input device 160 is installed at the surface of the information processing apparatus 100, and connected to the input/output interface 158 in the information processing apparatus 100, for example. Examples of the operation input device 160 include a button, arrow keys, rotary type selectors such as jog dials, and a combination thereof.

The display device 162 is installed at the surface of the information processing apparatus 100, and connected to the input/output interface 158 in the information processing apparatus 100, for example. Examples of the display device 162 include a liquid crystal display, an organic electro-luminescence display (also referred to as an organic light emitting diode (OLED) display), and a lamp.

Of course, the input/output interface 158 is capable of being connected to an external device such as an operation input device (for example, keyboard or mouse) or a display device serving as an external apparatus of the information processing apparatus 100. In addition, the display device 162 may be a device capable of displaying and being operated by a user such as a touchscreen.

The communication interface 164 is a communication means included in the information processing device 100, and functions as the communication unit (not illustrated) for communicating with an external device or an external apparatus in a wired/wireless manner via a network (or directly). Examples of the external device and the external apparatus include an external imaging device, an external power generation device, an external sensor, and a server. Here, the communication interface 164 includes, for example, IEEE 802.11 port and transceiver circuit (wireless communication), IEEE 802.15.1 port and transceiver circuit (wireless communication), communication antenna and radio frequency (RF) circuit (wireless communication), local area network (LAN) terminal and transceiver circuit (wired communication), and the like. Here, the network according to the present embodiment may include, for example, a wired network such as LAN or wide area network (WAN), a wireless network such as wireless WAN (WWAN: Wireless Wide Area Network) or wireless WAN (WMAN: Wireless Wide Area Network) using a base station, the Internet using a communication protocol such as the Transmission Control Protocol/Internet Protocol (TCP/IP), and the like.

The power generation device 166 functions as the power generation unit 104 to generate power according to a corresponding power generation method. Examples of the power generation device 166 include a power generator, a power transmission apparatus using electromagnetic resonance or electromagnetic induction, and the like. Examples of the power generator includes a vibration or motion powered generator, a photovoltaic cell, a thermoelectric conversion element, an enzyme battery, radio wave power generation, and adjacent electromagnetic field power generation. In addition, the power generation device 166 may be a device or an element capable of generating power according to any power generation method, for example. The power generation device 166 may be made by combining a plurality of power generation devices using different power generation methods, for example.

The power storage device 168 functions as the power storage unit 106 to store power such as the power generated by the power generation device 166. Examples of the power storage device 168 include secondary batteries capable of storing power such as a lithium-ion secondary battery, a lithium-ion polymer battery, and a nickel-metal hydride battery, for example. The power storage device 168 may be, for example, any device capable of storing power, or any element capable of storing power such as a capacitor.

The imaging device 170 functions as the imaging unit 102 to capture images. The imaging device 170 is activated using, for example, power generated by the power generation device 166 and/or power stored in the power storage device 168.

Examples of the imaging device 170 include a lens/image sensor, and a signal processing circuit. In addition, for example, the imaging device 170 includes various kinds of mechanisms relating to image capturing such as a mechanism relating to a shutter. The lens/image sensor is constituted of an optical lens and a plurality of image sensors such as complementary metal-oxide-semiconductor

(CMOS). The signal processing circuit includes an automatic gain control (AGC) circuit and an analog to digital converter (ADC), for example, to convert analog signals generated by the image sensors to digital signals (image data). The signal processing circuit may carry out various kinds of signal processing such as a white balance correction process, a color compensation process, a gamma correction process, a YCbCr conversion process, or an edge enhancement process.

The information processing apparatus 100 carries out a process relating to the information processing method according to the present embodiment by the configuration illustrated in FIG. 5, for example. Note that, the hardware configuration of the information processing apparatus 100 according to the present embodiment is not limited to the configuration in FIG. 5.

For example, the information processing apparatus 100 may include a circuit relating to power generated by the power generation device 166 and power stored in the power storage device 168, such as a rectifier circuit, a regulator (booster circuit, debooster circuit, booster and debooster circuit, or the like), or a charge-discharge control circuit.

For example, the information processing apparatus 100 may further include a sensor serving as the detection unit (not illustrated) that detects a value relating to power generated by the power generation device and acquire detection information. Examples of the sensor according to the present embodiment include a vibration sensor (for example, in the case where the power generation device is the vibration or motion powered generator), a temperature sensor (for example, in the case where the power generation device is the thermoelectric conversion element), a luminance sensor (for example, in the case where the power generation device is the photovoltaic cell), and a sugar content sensor (for example, in the case where the power generation device is the enzyme battery). The sensor according to the present embodiment is not limited thereto. For example, the sensor may be a various kind of sensor capable of detecting values depending on a power generation method of the power generation device.

In the case where the information processing apparatus 100 is configured to carry out a process in a stand alone manner, the information processing apparatus 100 does not have to include the communication device 164.

For example, in the case where the information processing apparatus 100 carries out a process on the basis of a power generation amount of power generated by an external power generation device, the information processing apparatus 100 does not have to include the power generation device 166. In a similar way, for example, in the case where the information processing apparatus 100 carries out a process on the basis of a power storage amount of power stored in an external power storage device, the information processing apparatus 100 does not have to include the power storage device 168.

For example, in the case where the information processing apparatus 100 controls image capturing carried out by an external imaging device, or in the case where information relating to the image capturing is not recorded in the recording medium as environmental information, the information processing apparatus 100 does not have to include the imaging device 170.

In addition, the information processing apparatus 100 may be configured not to include the recording medium 156, the operation input device 160, or the display device 162.

With reference to FIG. 4 again, the example of the configuration of the information processing apparatus 100 is described. The imaging unit 102 includes the imaging device to capture images. Examples of an image of an environment captured by the imaging unit 102 include an image of a power generation environment of the power generation device. The imaging unit 102 may capture an image of any environment. Even in the case where the imaging unit 102 captures an image of any environment, the information processing apparatus 100 records information relating to time when the image has been captured as the environmental information, and therefore it is possible for a user to recognize the power generation environment of the power generation device, for example.

The power generation unit 104 includes the power generation device to generate power according to one or more corresponding power generation methods. Examples of the power generation device constituting the power generation unit 104 include a power generator, a power transmission apparatus using electromagnetic resonance or electromagnetic induction, and the like. Examples of the power generator includes a vibration or motion powered generator, a photovoltaic cell, a thermoelectric conversion element, an enzyme battery, radio wave power generation, and adjacent electromagnetic field power generation.

The power storage unit 106 includes the power storage device to store power such as power generated by the power generation device constituting the power generation unit 104 or power generated by an external power generation device. Examples of the power storage unit 106 include a secondary battery and a capacitor.

For example, the control unit 108 is constituted of the MPU and serves to control the entire information processing apparatus 100. In addition, the control unit 108 includes the determination unit 110 and the processing unit 112 for example, and serves to lead the process relating to the information processing method according to the present embodiment.

The determination unit 110 serves to lead the above described process (1) (determination process). The determination unit 110 determines whether environmental information is recorded, on the basis of one or both of a power generation amount and a power storage amount. The power generation amount is an amount of power generated by the power generation device such as the power generation device constituting the power generation unit 104 or an external power generation device. The power storage amount is an amount of power stored in the power storage device that stores the power generated by the power generation device. Examples of the power storage device include the power storage device constituting the power storage unit 106 and an external power storage device.

More specifically, the determination unit 110 determines whether environmental information is to be recorded by carrying out a threshold process using "the power generation amount and/or the power storage amount" and thresholds set for the power storage amount and the power generation amount, for example.

The processing unit 112 serves to lead the above described process (2) (recording control process). When the determination unit 110 determines that the environmental information is to be recorded, the processing unit 112 records environmental information in the recording medium by carrying out the process relating to the recording of the environmental information. As the process relating to recording of environmental information, the processing unit 112 carries out any of the process relating to the recording of the environmental information according to the first example in (2-1) to the process relating to the recording of the environmental information according to the fourth example in (2-4), for example.

The control unit 108 includes the determination unit 110 and the processing unit 112 for example, and serves to lead the process relating to the information processing method according to the present embodiment.

The information processing apparatus 100 carries out a process relating to the information processing method according to the present embodiment (for example the above described process (1) (determination process) and the above described process (2) (recording control process)) by the configuration illustrated in FIG. 4, for example.

By the configuration illustrated in FIG. 4, the information processing apparatus 100 is capable of causing a user to recognize the power generation environment of the power generation device, for example.

In addition, By the configuration illustrated in FIG. 4, the information processing apparatus 100 has effects such as the above described effect achieved by carrying out the process relating to the information processing method according to the present embodiment, for example.

Note that, the configuration of the information processing apparatus according to the present embodiment is not limited to the configuration in FIG. 4.

For example, the information processing apparatus according to the present embodiment may further include a function control process unit (not illustrated) that serves to lead the above described process (3) (function control process). In the case where the information processing apparatus includes function control process unit (not illustrated), the control unit 108 may serve as the function control process unit (not illustrated), or a processing circuit different from the control unit 108 may serve as the function control process unit (not illustrated), for example.

Alternatively, the information processing apparatus according to the present embodiment may include one or both of the determination unit 110 and the processing unit 112 illustrated in FIG. 4 in addition to the control unit 108 (this is achieved by different processing circuits, for example).

For example, the information processing apparatus according to the present embodiment may further include the detection unit (not illustrated) configured of any sensor that detects values relating to power generation carried out by the power generation device. In the case where the information processing apparatus according to the present embodiment includes the detection unit (not illustrated), the information processing apparatus is capable of further recording detection information obtained from the detection unit (not illustrated) in the recording medium as the environmental information, for example.

The information processing apparatus has been used as the example of the present embodiment. However, the present embodiment is not limited thereto. The present embodiment is applied to various kinds of equipment such as an imaging apparatus such as a still camera or a video camera, a tablet apparatus, a communication apparatus such as a cell phone or a smartphone, a video/music reproduction device (or video/music recording and reproduction device), a game console, and a computer such as a personal computer (PC), for example. For example, the present embodiment may be a wearable apparatus. The present embodiment is applied to the various equipment relating to the application examples of the information processing apparatus according to the present embodiment. In addition, the present embodiment may be applied to a processing integrated circuit (IC) which can be installed in the above described equipment.

The present embodiment may be achieved by a system including a plurality of apparatuses or a system for which network connection (or communication between apparatuses) is necessary such as cloud computing. In other words, the information processing apparatus according to the present embodiment may be achieved as an information processing system including a plurality of apparatuses, for example.

### (Program according to Present Embodiment)

A program for causing a computer to function as the information processing apparatus according to the present embodiment (for example, program capable of executing the process relating to the information processing method according to the present embodiment, such as "the above described process (1) (determination process) and the process (2) (recording control process)", or "the process (1) (determination process) to the process (3) (function control process)") is executed by a processor or the like in the computer. Thereby, it is possible to cause a user to recognize the power generation environment of the power generation device.

It is also possible to obtain the advantages achieved by performing the process for implementing the information processing method according to the present embodiment by allowing a program for causing a computer to function as the information processing apparatus according to the present embodiment to be executed by a processor or other processing units in the computer.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, the program (computer program) causing the computer to function as the information processing apparatus according to the embodiment has been provided above. However, the embodiment can also provide a recording medium on which the foregoing program is stored.

The above-described configuration is an example of the present embodiment and, of course, pertains to the technical scope of an embodiment of the present disclosure.

In addition, the effects described in the present specification are merely illustrative and demonstrative, and not limitative. In other words, the technology according to the present disclosure can exhibit other effects that are evident to those skilled in the art along with or instead of the effects based on the present specification.

### Reference Signs List

- 100: information processing apparatus
- 102: imaging unit
- 104: power generation unit
- 106: power storage unit
- 108: control unit
- 110: determination unit
- 112: processing unit

## Claims

1. A wearable information processing apparatus (100) comprising:
a power generation device (166),
a power storage device (168),
a determination unit (110) configured to determine whether environmental information of an environment of the power generation device is to be recorded, on the basis of both of a power generation amount (P) of power generated by the power generation device (166) and a power storage amount (Q) of power stored in the power storage device (168) that stores the power generated by the power generation device (166);
an imaging device (170); and
a processing unit (112) configured to record the environmental information in a recording medium (156) by carrying out a process relating to the recording of the environmental information, in a case where it is determined that the environmental information is to be recorded,
**characterized in that** the determination unit (110) determines that the environmental information is to be recorded in a case where the power generation amount (P) is greater than or equal to a power generation amount threshold (p) and where the power storage amount (Q) is greater than or equal to a power storage amount threshold (q), or in a case where the power generation amount (P) is strictly greater than the power generation amount threshold (p) and the power storage amount (Q) is strictly greater than the power storage amount threshold (q),
wherein, as the process relating to the recording of the environmental information, the processing unit (112) is adapted to
causes the imaging device (170) to capture an image of the environment of the power generation device, and
records information relating to the image capturing carried out by the imaging device (170) as the environmental information in the recording medium, and
wherein the information relating to the image capturing both of the image captured by the imaging device (170) and information relating to time when the image has been captured.

2. The information processing apparatus according to claim 1, further comprising:
an imaging unit (102) that includes the imaging device (170).

3. The information processing apparatus according to claim 1, further comprising:
a power generation unit (104) that includes the power generation device (166).

4. The information processing apparatus according to claim 1, further comprising:
a power storage unit (106) that includes the power storage device (168).

5. An information processing method executed by a wearable information processing apparatus (100), the wearable information processing apparatus comprising a power generation device (166), a power storage device (168) and an imaging device (170), the information processing method comprising:
a step of determining whether environmental information of an environment of the power generation device is to be recorded, on the basis of both of a power generation amount (P) of power generated by a power generation device (166) and a power storage amount (Q) of power stored in the power storage device (168) that stores the power generated by the power generation device (166); and
a step of recording the environmental information in a recording medium (156) by carrying out a process relating to the recording of the environmental information, in a case where it is determined that the environmental information is to be recorded,
wherein, in the determining step, it is determined that the environmental information is to be recorded in a case where the power generation amount (P) is greater than or equal to a power generation amount threshold (p) and the power storage amount (Q) is greater than or equal to a power storage amount threshold (q), or in a case where the power generation amount (P) is strictly greater than the power generation amount threshold (p) and the power storage amount (Q) is strictly greater than the power storage amount threshold (q),
wherein, as the process relating to the recording of the environmental information, the processing unit (112)
causes the imaging device (170) to capture an image of the environment of the power generation device, and
records information relating to the image capturing carried out by the imaging device (170) as the environmental information in the recording medium, and
wherein the information relating to the image capturing is both of an image captured by the imaging device (170) and information relating to time when the image has been captured.

## Patentansprüche

1. Tragbare Informationsverarbeitungseinrichtung (100), die Folgendes umfasst:
eine Stromerzeugungsvorrichtung (166),
eine Stromspeichervorrichtung (168),
eine Bestimmungseinheit (110), die dazu ausgelegt ist, auf Basis sowohl einer Stromerzeugungsmenge (P) von Strom, der von der Stromerzeugungsvorrichtung (166) erzeugt wird, als auch einer Stromspeichermenge (Q) des Stroms, der in der Stromspeichervorrichtung (168) gespeichert wird, die den Strom speichert, der von der Stromerzeugungsvorrichtung (166) erzeugt wird, zu bestimmen, ob Umgebungsinformationen einer Umgebung der Stromerzeugungsvorrichtung aufgezeichnet werden sollen;
eine Bildgebungsvorrichtung (170) und
eine Verarbeitungseinheit (112), die dazu ausgelegt ist, in einem Fall, in dem bestimmt wird, dass die Umgebungsinformationen aufgezeichnet werden sollen, durch Durchführen eines Prozesses, der das Aufzeichnen der Umgebungsinformationen betrifft, die Umgebungsinformationen auf einem Aufzeichnungsmedium (156) aufzuzeichnen,
**dadurch gekennzeichnet, dass** die Bestimmungseinheit (110) in einem Fall, in dem die Stromerzeugungsmenge (P) größer als oder gleich einem Stromerzeugungsmengenschwellwert (p) ist und in dem die Stromspeichermenge (Q) größer als oder gleich einem Stromspeichermengenschwellwert (q) ist, oder in einem Fall, in dem die Stromerzeugungsmenge (P) strikt größer als der Stromerzeugungsmengenschwellwert (p) ist und die Stromspeichermenge (Q) strikt größer als der Stromspeichermengenschwellwert (q) ist, bestimmt, dass die Umgebungsinformationen aufgezeichnet werden sollen,
wobei die Verarbeitungseinheit (112) als Prozess, der das Aufzeichnen der Umgebungsinformationen betrifft, zu Folgendem angepasst ist
die Bildgebungsvorrichtung (170) zu veranlassen, ein Bild der Umgebung der Stromerzeugungsvorrichtung zu erfassen, und
Informationen, die die Bilderfassung betreffen, die von der Bildgebungsvorrichtung (170) durchgeführt wird, als die Umgebungsinformationen auf dem Aufzeichnungsmedium auf zu zeichnen und
wobei die Informationen, die die Bilderfassung betreffen, sowohl das Bild, das von der Bildgebungsvorrichtung (170) erfasst wird, als auch Informationen, die eine Zeit betreffen, zu der das Bild erfasst wurde, sind.

2. Informationsverarbeitungseinrichtung nach Anspruch 1, die ferner Folgendes umfasst:
eine Bildgebungseinheit (102), die die Bildgebungsvorrichtung (170) beinhaltet.

3. Informationsverarbeitungseinrichtung nach Anspruch 1, die ferner Folgendes umfasst:
eine Stromerzeugungseinheit (104), die die Stromerzeugungsvorrichtung (166) beinhaltet.

4. Informationsverarbeitungseinrichtung nach Anspruch 1, die ferner Folgendes umfasst:
eine Stromspeichereinheit (106), die die Stromspeichervorrichtung (168) beinhaltet.

5. Informationsverarbeitungsverfahren, das von einer tragbaren Informationsverarbeitungseinrichtung (100) ausgeführt wird, wobei die tragbare Informationsverarbeitungseinrichtung eine Stromerzeugungsvorrichtung (166), eine Stromspeichervorrichtung (168) und eine Bildgebungsvorrichtung (170) umfasst, wobei das Informationsverarbeitungsverfahren Folgendes umfasst:
einen Schritt des Bestimmens auf Basis sowohl einer Stromerzeugungsmenge (P) von Strom, der von einer Stromerzeugungsvorrichtung (166) erzeugt wird, als auch einer Stromspeichermenge (Q) des Stroms, der in der Stromspeichervorrichtung (168) gespeichert wird, die den Strom speichert, der von der Stromerzeugungsvorrichtung (166) erzeugt wird, ob Umgebungsinformationen einer Umgebung der Stromerzeugungsvorrichtung aufgezeichnet werden sollen; und
einen Schritt des Aufzeichnens der Umgebungsinformationen auf einem Aufzeichnungsmedium (156) durch Durchführen eines Prozesses, der das Aufzeichnen der Umgebungsinformationen betrifft, in einem Fall, in dem bestimmt wird, dass die Umgebungsinformationen aufgezeichnet werden sollen,
wobei in einem Fall, in dem die Stromerzeugungsmenge (P) größer als oder gleich einem Stromerzeugungsmengenschwellwert (p) ist und die Stromspeichermenge (Q) größer als oder gleich einem Stromspeichermengenschwellwert (q) ist, oder in einem Fall, in dem die Stromerzeugungsmenge (P) strikt größer als der Stromerzeugungsmengenschwellwert (p) ist und die Stromspeichermenge (Q) strikt größer als der Stromspeichermengenschwellwert (q) ist, beim Bestimmungsschritt bestimmt wird, dass die Umgebungsinformationen aufgezeichnet werden sollen,
wobei die Verarbeitungseinheit (112) als Prozess, der das Aufzeichnen der Umgebungsinformationen betrifft,
die Bildgebungsvorrichtung (170) veranlasst, ein Bild der Umgebung der Stromerzeugungsvorrichtung zu erfassen, und
Informationen, die die Bilderfassung betreffen, die von der Bildgebungsvorrichtung (170) durchgeführt wird, als die Umgebungsinformationen auf dem Aufzeichnungsmedium aufzeichnet und
wobei die Informationen, die die Bilderfassung betreffen, sowohl ein Bild, das von der Bildgebungsvorrichtung (170) erfasst wird, als auch Informationen, die eine Zeit betreffen, zu der das Bild erfasst wurde, enthalten.

## Revendications

1. Appareil (100) de traitement d'informations pouvant être porté, comportant :
un dispositif (166) de génération d'électricité,
un dispositif (168) de stockage d'électricité,
une unité (110) de détermination configurée pour déterminer si des informations environnementales d'un environnement du dispositif de génération d'électricité doivent être enregistrées, en se basant à la fois sur une quantité de génération d'électricité (P) d'électricité générée par le dispositif (166) de génération d'électricité et sur une quantité de stockage d'électricité (Q) d'électricité stockée dans le dispositif (168) de stockage d'électricité qui stocke l'électricité générée par le dispositif (166) de génération d'électricité ;
un dispositif (170) d'imagerie ; et
une unité (112) de traitement configurée pour enregistrer les informations environnementales dans un support (156) d'enregistrement en réalisant un processus relatif à l'enregistrement des informations environnementales, dans un cas où il est déterminé que les informations environnementales doivent être enregistrées,
**caractérisé en ce que** l'unité (110) de détermination détermine que les informations environnementales doivent être enregistrées dans un cas où la quantité de génération d'électricité (P) est supérieure ou égale à un seuil de quantité de génération d'électricité (p) et où la quantité de stockage d'électricité (Q) est supérieure ou égale à un seuil de quantité de stockage d'électricité (q), ou dans un cas où la quantité de génération d'électricité (P) est strictement supérieure au seuil de quantité de génération d'électricité (p) et
où la quantité de stockage d'électricité (Q) est strictement supérieure au seuil de quantité de stockage d'électricité (q),
l'unité (112) de traitement étant prévue, en tant que processus relatif à l'enregistrement des informations environnementales, pour
amener le dispositif (170) d'imagerie à capturer une image de l'environnement du dispositif de génération d'électricité et
enregistrer des informations relatives à la capture d'image réalisée par le dispositif (170) d'imagerie en tant qu'informations environnementales dans le support d'enregistrement, et
les informations relatives à la capture d'image étant à la fois l'image capturée par le dispositif (170) d'imagerie et des informations relatives au moment où l'image a été capturée.

2. Appareil de traitement d'informations selon la revendication 1, comportant en outre :
une unité (102) d'imagerie qui comprend le dispositif (170) d'imagerie.

3. Appareil de traitement d'informations selon la revendication 1, comportant en outre :
une unité (104) de génération d'électricité qui comprend le dispositif (166) de génération d'électricité.

4. Appareil de traitement d'informations selon la revendication 1, comportant en outre :
une unité (106) de stockage d'électricité qui comprend le dispositif (168) de stockage d'électricité.

5. Procédé de traitement d'informations exécuté par un appareil (100) de traitement d'informations pouvant être porté, l'appareil de traitement d'informations pouvant être porté comportant un dispositif (166) de génération d'électricité. un dispositif (168) de stockage d'électricité et un dispositif (170) d'imagerie, le procédé de traitement d'informations comportant :
une étape consistant à déterminer si des informations environnementales d'un environnement du dispositif de génération d'électricité doivent être enregistrées, en se basant à la fois sur une quantité de génération d'électricité (P) d'électricité générée par un dispositif (166) de génération d'électricité et sur une quantité de stockage d'électricité (Q) d'électricité stockée dans le dispositif (168) de stockage d'électricité qui stocke l'électricité générée par le dispositif (166) de génération d'électricité ; et
une étape consistant à enregistrer les informations environnementales dans un support (156) d'enregistrement en réalisant un processus relatif à l'enregistrement des informations environnementales, dans un cas où il est déterminé que les informations environnementales doivent être enregistrées,
une détermination étant effectuée, lors de l'étape de détermination, selon laquelle les informations environnementales doivent être enregistrées dans un cas où la quantité de génération d'électricité (P) est supérieure ou égale à un seuil de quantité de génération d'électricité (p) et où la quantité de stockage d'électricité (Q) est supérieure ou égale à un seuil de quantité de stockage d'électricité (q), ou dans un cas où la quantité de génération d'électricité (P) est strictement supérieure au seuil de quantité de génération d'électricité (p) et où la quantité de stockage d'électricité (Q) est strictement supérieure au seuil de quantité de stockage d'électricité (q),
l'unité (112) de traitement, en tant que processus relatif à l'enregistrement des informations environnementales,
amenant le dispositif (170) d'imagerie à capturer une image de l'environnement du dispositif de génération d'électricité, et
enregistrant des informations relatives à la capture d'image réalisée par le dispositif (170) d'imagerie en tant qu'informations environnementales dans le support d'enregistrement, et
les informations relatives à la capture d'image étant à la fois une image capturée par le dispositif (170) d'imagerie et des informations relatives au moment où l'image a été capturée.
